# EUROPEAN PATENT APPLICATION

(11) **EP 1 610 006 A1**
(43) Date of publication of application: **28.12.2005**
(21) Application number: 05253850.1
(22) Date of filing: 21.06.2005
(51) Int. Cl.: F16B 37/06

(54) **Captive fastener**

(30) Priority: 21.06.2004 GB 0413866
(71) Applicant: BAS Components Limited, Sevenoaks, Kent TN14 5DS (GB)
(72) Inventor: Mangapora, Robert, Ohio 44406 (US)
(74) Representative: Luckhurst, Anthony Henry William

(57) **Abstract**

A captive fastener for plastics material has a head 6 which bears on one side of the material. A shank 4 is a close fit in an aperture in the material, and tabs 26 are deformed over to trap the fastener in the material.

## Description

### Captive Fastener

The present invention relates to a captive fastener. Such fasteners are well known and are typically in the form of a threaded nut or stud. The present applicants market one form of captive fastener under the trade mark FLANGEFORM. Details of such a fastener and a manner of mounting the fastener in sheet metal are described in US-A-3 938 239, for example.

Typically the fastener is inserted through a pre-formed circular hole in the metal sheet, and then the sheet and/or fastener are deformed to 'capture' the fastener. Formations, such as ribs, may be provided on the outside surface of the fastener to increase the torque resistance of the fastener: to resist it twisting in the metal sheet. Pierce fasteners are also known in which the fastener shank pierces the sheet material to form the hole, such as in US-A-4 389 766.

We have realised that there is a need for a captive fastener for use in composite materials, particularly composite materials having a polymer matrix such as thermoplastics, and for use in plastics generally. Fasteners have been mounted in plastics material by using a force fit, when a sufficiently large depth of material is available, or by adhesive mounting, for example. Thus, in one aspect our invention provides a captive fastener mounted in a composite or plastics sheet material. The captive fastener is deformed during mounting to grip the sheet material and hold the fastener in position.

Composite materials and plastics may not have the same response to being worked as sheet metal. Thus in a preferred form of the invention we form an aperture in the composite material or plastics for receiving the fastener. The aperture may be formed during a moulding process, or by stamping or cutting. The aperture periphery is preferably non-circular and the fastener has a shank portion which fits in the aperture, the shank portion co-operating with the aperture periphery to prevent rotation of the fastener. In one form the aperture may be polygonal such as a triangle, square, hexagon or the like. A convex outline is preferred, and we presently prefer an outline without sharp points or apices. We presently prefer an aperture having a periphery which is rounded in parts. A completely rounded periphery such as an oval may also be used. The fastener shank is preferably a close fit in the aperture to prevent rotation of the fastener in the aperture.

A head is formed at one end of the shank. The head bears on the surface of composite or plastics material at or near the periphery of the aperture. At the other end of the shank, the fastener is deformed to bear on the composite or plastics material to prevent the fastener being pulled through the material from the direction of the head and so secure the fastener in the aperture. Tabs or a peripheral flange may extend from the fastener shank, and are deformed to secure the fastener in place. Thus, the composite or plastics material is sandwiched tightly between the fastener head and the tabs. During the deformation process, the main force is applied only to the fastener, avoiding damage to the composite or plastics material. By providing deformable tabs, the force required to deform the fastener is relatively low, and so avoids damage to the surrounding composite or plastics material.

Preferably an outer wall of a tab is contiguous with the periphery of the shank. An inner wall of the tab is angled to the fastener axis. Preferably it subtends an angle of about 55 to 65 degrees, more probably 58 to 62, and very preferably about 60 degrees. The inner wall is arcuate and curves about the fastener axis to maintain the slope relative to the fastener axis, forming an amphitheatre type shape.

In another embodiment the tab inner wall may subtend an angle of about 25 to 35 degrees, preferably about 28 to 32 degrees and more preferably about 30 degrees to the fastener axis. A flat may be provided at the upper surface of the tab.

Where the shank is elongate in the direction perpendicular to the fastener axis, the tabs may be formed on opposite ends, extending around the shorter width of the shank. The outer wall of the tabs may be parallel to the fastener axis along the mid-line of the shank, and chamfered at the sides of the shank.

Preferably the aperture in the composite or plastics material is formed with a chamfered lip in the vicinity of the tabs or flange on the fastener. The tabs are deformed over to bear against the chamfered lip, and preferably the shank end surface is flush with or slightly below the surface of the composite or plastics material.

Other aspects and preferred features of the invention will be apparent from the following description and the accompanying claims.

The invention will be further described by way of example, with reference to the accompanying drawings, in which:
Figure 1 is a side view of a captive fastener forming an embodiment of the invention;
Figure 2 is a plan view of the fastener of Figure 1;
Figure 3 shows a cross-section through a tool for deforming the fastener of Figure 1 to mount it in a sheet of composite or plastics material;
Figure 4 shows the fastener of Figure 1 mounted in the tool of Figure 3, and placed in an aperture in a sheet of plastics material;
Figure 5 shows the completion of the operation of deforming fastener to fix the fastener in the plastics sheet;
Figures 6 is a perspective view of a captive fastener of the invention;
Figure 7 is a plan view of another embodiment of a fastener in accordance with the invention;
Figure 8 is a cross-section along the line VIII-VIII of Figure 7, and
Figure 9 is an end view of the fastener of Figure 7.

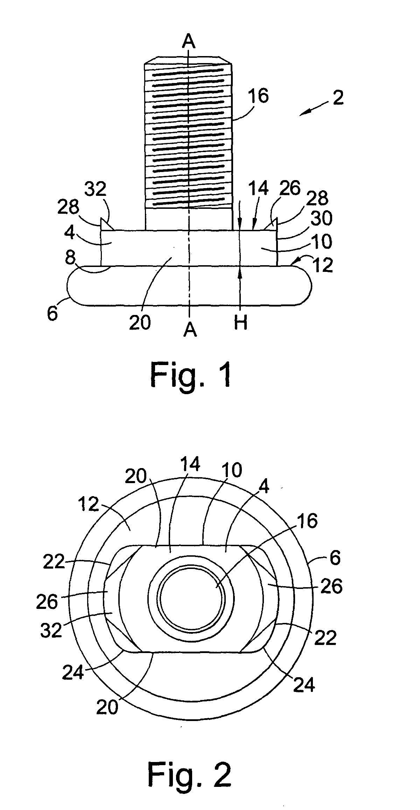

Figure 1 shows a fastener 2 in accordance with the invention having a shank 4 with a head 6 at one end 8 of the shank 4. Head 6 overhangs the periphery 10 of the shank 4, the exposed undersurface 12 of the head bearing, in use, on a surface of the material in which the fastener 2 is mounted. The other end 14 of the shank 2 carries a fastener configuration, namely a threaded shaft 16 forming a screw or stud. In place of shaft 16, fastener 2 may have a fastener configuration in the form of a threaded bore through the shank 2 and/or head 6 to form a nut.

Fastener 2 is of metal, typically of Boron Steel. The material used may depend on the particular requirements, but needs to be deformable as described hereinafter. The fastener 2 may be cold formed.

Shank 4 is generally rectangular in plan view (Figure 2) with flat sides 20 and arcuate ends 22. Ends 22 merge with sides 20 at rounded corners 24.

Projecting upwards (as viewed in Figure 1) from ends 22 are tabs 26. The outer surface 28 of tabs 26 is a continuation of the outer surface 30 of the ends 22, 24. The inner surface 32 of tabs 26 is formed by a plane which slopes at a predetermined angle to the axis A-A of the fastener 2.

The height H of the shank 4 is matched to the thickness of the material in which the fastener is to be mounted. The height H will preferably be equal to or slightly less than the thickness of the material, typically up to 0.3mm less than the thickness of the sheet material.

As will be described hereinafter, the fastener is mounted in a sheet of composite or plastics material by placing the shank 4 in a closely fitting aperture in the material, the head 6 abutting one surface of the material, and deforming the tabs 26 to sandwich the material between the head 6 and tabs 26. Preferably, the aperture is equal to the size of the shank +/- 0.2mm. The fit will depend on the material and the application.

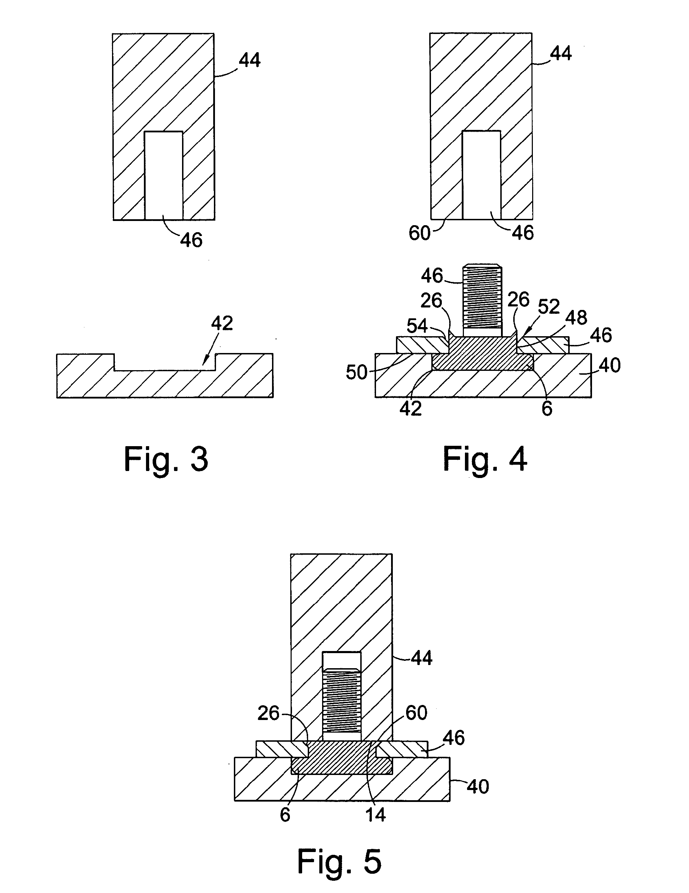

Referring to Figure 3, a tool for mounting the fasteners 2 in a sheet of material comprises a hardened steel lower mandrel 40 having a recess 42 for receiving the head 6. Recess 42 is of substantially the same depth as the thickness of head 6. A hardened steel punch 44 is positioned above mandrel 40 and has a bore or recess 46 to straddle the shaft 16.

Referring to Figure 4, a flat sheet 46 of nylon resin material has been moulded with an aperture 48 which corresponds in outline to the shank 4 of fastener 2. The fastener 2 is positioned in the aperture 48. Shank 4 is a close fit in aperture 48 in order to hold the fastener in place during handling of the sheet. It will be appreciated that in the production process other possibilities exist. For example: the fastener may be positioned in the recess 42, and the sheet then placed over the fastener; the assembly may be inverted, the fastener projecting downwards through the sheet, and the mandrel 40 positioned above the sheet.

The lower surface 50 of sheet 46, as viewed in Figure 4, rests on the mandrel 40, the fastener head 6 sitting in recess 42 in the mandrel. The depth of recess 42 is equal to the height of the head 6. The upper edge 52 of aperture 48 has a chamfer 54 at the junction with the upper surface 56 in a region corresponding to the tabs 26.

Referring to Figure 5, the punch 44 is brought down onto the tabs 26. The lower surface 60 of punch 44 deforms the tabs outwardly and comes to rest at the end surface 14 of the shank 4. The press setting or a dead stop limits the downward movement of the punch. The tabs 26 are deformed so as to lie substantially flush with the surface 56. The force applied to the tabs depends on the material used and the design of the tabs, but a force in the region of 5000lbs may typically be used.

Certain dimensions of the fastener are important to the most effective operation of the fastener and its installation. Thus, the depth of the shank 4 should preferably be close to, or slightly less than, the thickness of the sheet 46. The height of the tabs 26 and the angle of the sloping surface 32 is also important to ensure that the tabs 26 are adequately deformed over by the punch 44. This can be determined by trial.

The deformed tabs 26 cooperate with head 6 to hold the fastener in place in the sheet 46, and the shape of the shank 4, corresponding to the aperture 48, prevents rotation of the fastener in the sheet 46.

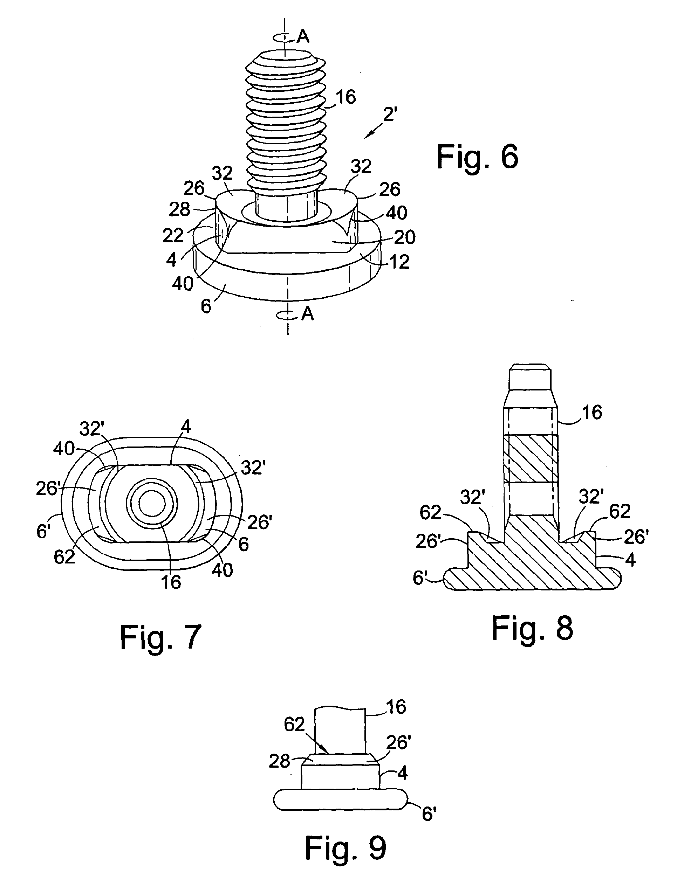

Figure 6 shows a perspective view of a fastener in accordance with the invention. The outer wall 28 of the tabs 26 is chamfered at the junction 40 with the sidewalls 20 of the shank 4. The inner wall 32 subtends an angle of θ of 30 degrees with the plane perpendicular to the fastener axis A-A.

In another embodiment, the wall 32 of the tab subtends an angle of between 25 and 35 degrees with the fastener axis, preferably 28 to 32 degrees, more preferably about 30 degrees. In yet another embodiment the angle is about 40 to 50 degrees, preferably about 43 to 47 degrees, most preferably about 45 degrees.

The captive fastener of Figures 7 to 9 is similar to the fasteners of Figures 1 and 2 and Figure 6. Head 6' of the fastener is oval in plan view as seen in Figure 7. In the embodiment of Figures 7 to 9, the main difference is in the shape of the tabs 26'. Tabs 26' are thicker in the radial direction of the fastener, to form a truncated wedge shape as seen in the cross-sectional view of Figure 8. Thus the tabs 26' have a flat 62 at their upper surface. The inner walls 32' of the tabs 26' in this embodiment subtend an angle of 30 degrees with the fastener axis. Thus the tabs 26' are of substantially the same height as the tabs 26 of the previous embodiment but provide a greater volume of material to be deformed or peened over when installing the fastener in the sheet material and so enhancing the push through resistance of the fastener in the direction towards the head 6.

Although the fastener is particularly applicable to plastics and other rigid or semi-rigid materials and components, it may also be used in metals, particularly softer metals such as magnesium. The performance of the fastener will depend in part on the nature of the sheet material.

## Claims

1. A method of mounting a captive fastener in a composite or plastics sheet material, **characterised in that** the captive fastener is deformed during mounting to grip the sheet material and hold the fastener in position.

2. A method as claimed in claim 1, wherein the fastener has a shank which is positioned in an aperture in the sheet material, a head at one end of the shank which bears against one surface of the sheet material, and a tab at the other end of the shank which is deformed to bear against the sheet material.

3. A method as claimed in claim 2, wherein the aperture and shank are shaped to inhibit rotation of the shank in the aperture.

4. A method as claimed in claim 1, wherein the fastener has a shank which is received in the aperture in the sheet material and the aperture and shank are shaped to inhibit rotation of the shank in the aperture.

5. A method as claimed in claim 3 or 4, wherein the aperture is formed in the material prior to insertion of the fastener.

6. A method as claimed in claim 5, wherein the fastener is a close fit in the aperture.

7. A method as claimed in any one of claims 1 to 6, wherein the aperture has a chamfer at one end and the deformed tab co-operates with the chamfer.

8. A method as claimed in claim 7, wherein the deformed tab is substantially flush with the surface of the fastener.

9. A captive fastener comprising a shank which, in use, extends through a material in which the fastener is mounted, a head at one end of the shank, the head overhanging the shank to bear on the material, and a deformable fixing configuration at the other end of the shank, the fixing configuration being deformed in use to bear on a material in which the fastener is mounted.

10. A captive fastener as clamed in claim 9, wherein the fixing configuration extends from the other end of the shank, in the axial direction of the of the shank.

11. A captive fastener as claimed in claim 10, wherein the fixing configuration is a tab.

12. A captive fastener as claimed in claim 11, wherein the tab cross-section tapers in the direction away from the shank.

13. A captive fastener as claimed in claim 12, wherein the tab has a radially inner surface which slopes away from an axis of the fastener.

14. A captive fastener as claimed in claim 13, wherein the inner surface subtends an angle of about 55 to 65 degrees with the fastener axis, preferably about 58 to 62 degrees, more preferably about 60 degrees.

15. A captive fastener as claimed in claim 13, wherein the inner surface of the tab subtends an angle of about 25 to 35 degrees with the fastener axis, preferably about 28 to 32 degrees and more preferably about 30 degrees.

16. A captive fastener as claimed in any one of claims 11 to 15, wherein the tab has a flattened upper surface.

17. A captive fastener as claimed in any one of claims 11 to 16, wherein an axially extending outer surface of the tab is co-planar with an axially extending outer surface of the shank.

18. A captive fastener as claimed in any one of claims 11 to 17, wherein two tabs are provided and are arranged diametrically opposite one another relative to the fastener axis.

19. A captive fastener as claimed in any one of claims 10 to 18, wherein the shank has a non-circular cross-section.

20. A captive fastener as claimed in claim 19, wherein the shank has a flat at a side thereof.

21. A captive fastener as claimed in claim 19 or 20, wherein the shank has a convex surface at a side thereof.
